# EUROPÄISCHE PATENTSCHRIFT

(11) **EP 1 643 217 B1**
(45) Veröffentlichungstag und Bekanntmachung des Hinweises auf die Patenterteilung: **03.11.2010**
(21) Anmeldenummer: 05010394.4
(22) Anmeldetag: 12.05.2005
(51) Int. Cl.: G01D 5/244

(54) **Abtasteinheit und Positionsmesseinrichtung**
Scanning unit and position measuring arrangement
Unité de balayage et arrangement pour mesurer une position

(30) Priorität: 30.09.2004 DE 102004047458
(43) Veröffentlichungstag der Anmeldung: 05.04.2006
(73) Patentinhaber: Dr. Johannes Heidenhain GmbH, 83292 Traunreut (DE)
(72) Erfinder: Brandl, Sebastian, 83352 Altenmarkt (DE)

(56) Entgegenhaltungen:
- DE-A1- 3 637 126
- DE-B- 1 040 268
- US-A- 3 816 002
- US-A- 4 273 447
- US-A1- 2002 108 259
- US-A1- 2002 144 422
- US-B1- 6 622 391

## Beschreibung

Die Erfindung betrifft eine Abtasteinheit gemäß dem Oberbegriff des Anspruches 1 sowie eine Positionsmesseinrichtung gemäß dem Oberbegriff des Anspruchs 8.

Derartige Abtasteinheiten und Positionsmesseinrichtungen werden zur Messung von Längen oder von Winkeln in Produktionsmaschinen im Maschinenbau sowie vermehrt in der Halbleiterindustrie eingesetzt. An die Positionsmesseinrichtungen werden immer höhere Anforderungen gestellt. Um die Abtastsignale zu optimieren muss die Abtastplatte passend zu der Messteilung des Teilungsträgers ausgerichtet werden. Dabei wird die Abtastplatte in einer Ebene um eine Drehachse verschwenkt. Bei einer Längenmesseinrichtung ist diese Ebene parallel zur Ebene der Maßstaboberfläche auf der die Messteilung aufgebracht ist angeordnet. Diese Ausrichtung nennt man Moire-Justierung.

Die US 3,816,002 offenbart ein Wegmesssystem an einer Werkzeugmaschine. Das Wegmesssystem besteht aus einem Gehäuse mit einem daran befestigten Maßband. Zur Positionsmessung wird dieses Maßband von einer Abtasteinheit (transducer) abgetastet. Die Abtasteinheit weist ein Gehäuse auf, in dem Abtastelemente angeordnet sind. Eine Abtastplatte schließt einen Raum ab, in dem die Abtastelemente angeordnet sind. Das Gehäuse ist über ein Exzenterelement verschwenkbar, wobei das Exzenterelement um eine Befestigungsschraube drehbar ist und mit seiner Umfangsfläche mit dem Gehäuse kooperiert. Die Befestigungsschraube dient zum Befestigen des Gehäuses an einem der zu messenden Maschinenteile der Werkzeugmaschine.

Aus der DE 39 15 679 A1 ist eine Moire-Justierung bekannt. Dabei ist die Abtasteinheit mittels mehrerer Schrauben an einem Befestigungswinkel befestigt. Zusätzlich ist zur Moire-Justierung ein Exzenterelement in diesem Befestigungswinkel drehbar gelagert. Durch Verdrehen des Exzenterelementes wird die Abtasteinheit um einen Stift verschwenkt.

Diese Anordnung hat den Nachteil, dass zusätzlich zu den Schrauben separate Justierelemente vorgesehen werden müssen. Darüber hinaus muss bei jeder Schraube ein radiales Spiel vorgesehen werden um den Freiheitsgrad beim Verschwenken zuzulassen.

Der Erfindung liegt die Aufgabe zugrunde, eine Abtasteinheit und eine Positionsmesseinrichtung anzugeben, bei der die Justierelemente platzsparend angeordnet sind und eine exakte und einfache Justierung des Moire-Winkels ermöglicht wird.

Diese Aufgabe wird durch eine Abtasteinheit mit den Merkmalen des Anspruches 1 sowie durch eine Positionsmesseinrichtung mit den Merkmalen des Anspruches 9 gelöst.

Ein Vorteil der erfindungsgemäßen Anordnung besteht darin, dass außer den Befestigungselementen zur Befestigung der Abtastplatte an einem Träger nur eine Exzenterbuchse erforderlich ist, die besonders platzsparend angeordnet ist. Ein kompakter Aufbau der Abtasteinheit und somit der Positionsmesseinrichtung ist gewährleistet.

Besonders vorteilhaft ist, wenn die Abtastplatte mit nur zwei Schrauben an einem Träger befestigt ist, wobei eine Schraube die Drehachse zum Verschwenken der Abtastplatte gegenüber dem Träger bildet und die andere Schraube die Drehachse für die Exzenterbuchse bildet. Nach erfolgter Justierung werden die beiden Befestigungsschrauben fest angezogen. Dabei wird die Exzenterbuchse in der eingestellten Lage zwischen dem Schraubenkopf und dem Träger eingeklemmt und somit fixiert.

Weitere vorteilhafte Ausführungen sind in den abhängigen Ansprüchen angegeben.

Mit Hilfe der Zeichnungen wird ein Ausführungsbeispiel der Erfindung näher erläutert.

### Es zeigt

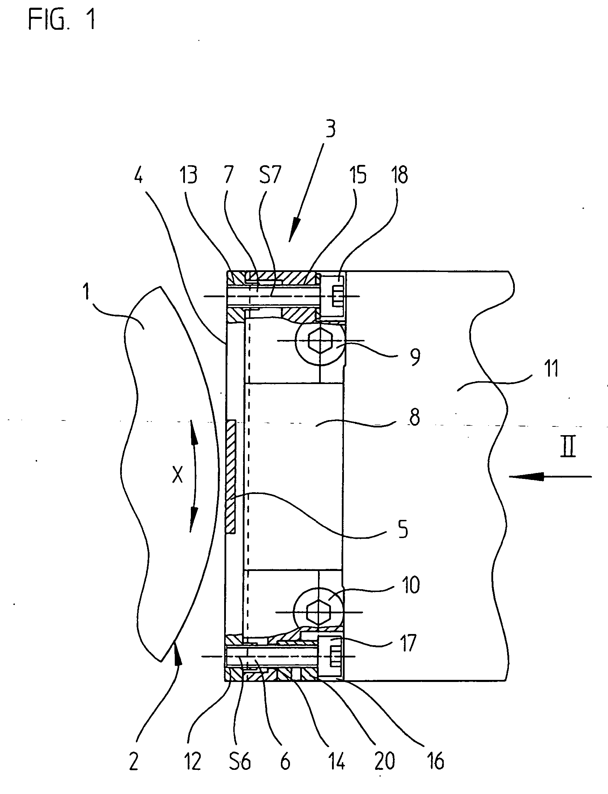

- Figur 1: eine Positionsmesseinrichtung mit einem trommelförmigen Teilungsträger und einer Abtasteinheit im Teilschnitt;
- Figur 2: eine Ansicht II der Abtasteinheit der Positionsmesseinrichtung gemäß Figur 1 (ohne Schraube 6);
- Figur 3: einen Teilschnitt III-III der Abtasteinheit gemäß Figur 2 und
- Figur 4: eine ausschnittsweise vergrößerte Ansicht IV der Abtasteinheit gemäß Figur 3 ohne Schraube.

Die Erfindung wird am Beispiel einer Winkelmesseinrichtung erläutert. Diese Winkelmesseinrichtung besteht aus einem trommelförmigen Teilungsträger 1. Am Umfang dieser Trommel 1 ist eine inkrementale Messteilung 2 aufgebracht, die zur Bildung von positionsabhängigen elektrischen Abtastsignalen von einer Abtasteinheit 3 abgetastet wird. Zur Abtastung der Messteilung 2 weist die Abtasteinheit 3 eine Abtastplatte 4 auf. In bekannter Weise wird das Licht einer Lichtquelle der Abtasteinheit 3 an der in Messrichtung X bewegten Messteilung 2 positionsabhängig moduliert. Die Abtastplatte 4 weist eine an die Messteilung 2 angepasste Abtastteilung 5 auf. Zur Optimierung der Abtastsignale ist die Abtastteilung 5 relativ zur Messteilung 2 justierbar, so dass die Teilungsstriche der Abtastteilung 5 in eine vorgegebene Ausrichtung zu den Teilungsstrichen der Messteilung 2 bringbar sind. Hierzu ist die Abtastplatte 4 mittels zweier Schrauben 6, 7 an einem Träger 8 befestigt. Dieser Träger 8 ist wiederum über mehrere Schrauben 9, 10 an einem zu messenden Maschinenteil 11 befestigt.

Die beiden Schrauben 6, 7 sind jeweils in ein Gewinde 12, 13 der Abtastplatte 4 eingeschraubt und ragen jeweils durch ein Durchgangsloch 14, 15 des Trägers 8 hindurch. Das Durchgangsloch 15 ist derart dimensioniert, dass sich die Schraube 7 spielfrei darin verdrehen lässt. Durch Verdrehen der Exzenterbuchse 20 wird die Abtastplatte 4 um die Drehachse S7 verschwenkt (Schwenkbewegung V), dabei verlagert sich der Schaft der Schraube 6 im Gehäuse 8, weshalb das Durchgangsloch 14 als Langloch mit der längeren Ausdehnung in Richtung der Schwenkbewegung V ausgeführt ist. Im dargestellten Beispiel ist der Träger das Gehäuse 8, welches die zur Abtastung benötigten Elemente wie Lichtquelle, Lichtdetektoren und Verstärker sowie Auswertebausteine umschließt. Die Abtastplatte 4 deckt die Öffnung des Gehäuses 8 ab.

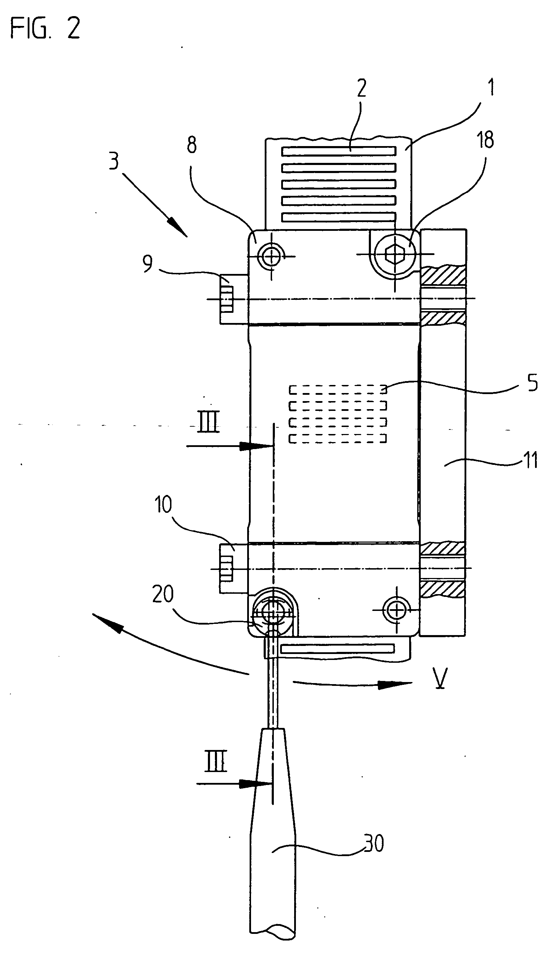

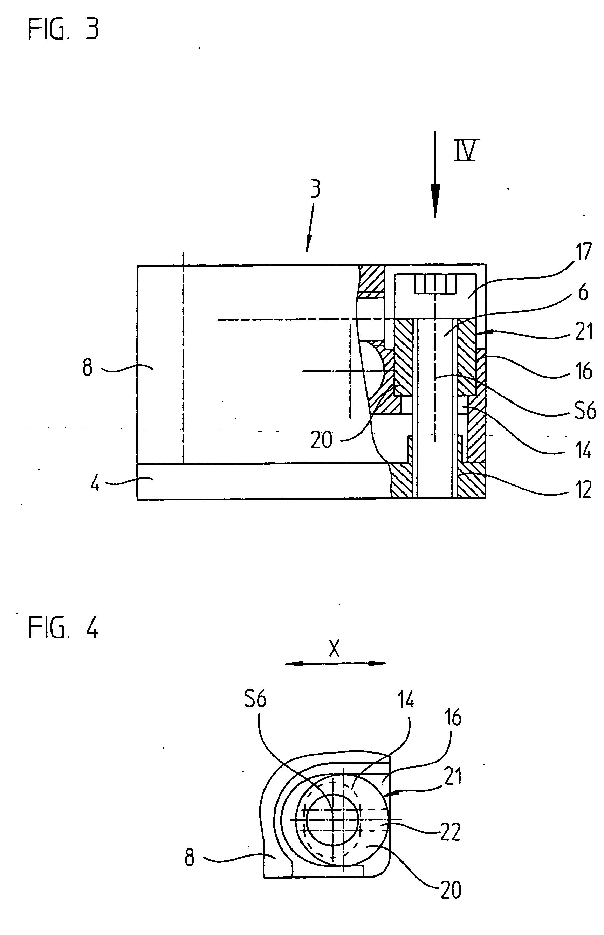

Wie insbesondere in den Figuren 2 und 3 erkennbar ist, erfolgt die Moire-Justierung durch Verdrehen einer Exzenterbuchse 20. Diese Exzenterbuchse 20 ist um den Schaft der Schraube 6 drehbar gelagert und wirkt mit seiner exzentrischen Umfangsfläche 21 mit einer Ausnehmung 16 des Trägers zusammen. Diese Ausnehmung hat die Form eines einseitig offenen Langloches 16, wie die Draufsicht in Figur 4 zeigt. Eine Verdrehung der Exzenterbuchse 20 um die Schraubenachse S6 verursacht eine Verschiebung der Schraube 6 in dem Langloch 14 entsprechend der Exzentrizität der Exzenterbuchse 20. Da die Schraube 6 in dieser radialen Bewegungsrichtung durch Eingriff des Gewindes 12 mit der Abtastplatte 4 spielfrei verbunden ist, wird diese Verschiebung auf die Abtastplatte 4 übertragen, was zu einer Schwenkbewegung V der Abtastplatte 4 relativ zum Gehäuse 8 um die Drehachse S7 der Schraube 7 führt. Die Exzenterbuchse 20 ist zwischen dem Kopf 17 der Schraube 6 und dem Gehäuse 8 angeordnet. Um eine Verdrehung der Exzenterbuchse 20 zu ermöglichen werden beide Schrauben 6, 7 leicht gelöst. Nach erfolgter Justierung werden beide Schrauben 6, 7 fest angezogen, wodurch sich jeweils der Schraubenkopf 17, 18 der Schrauben 6, 7 am Gehäuse 8 abstützt und die Abtastplatte 4 an das Gehäuse 8 zieht. Da die Exzenterbuchse 20 zwischen dem Schraubenkopf 17 und dem Gehäuse 8 angeordnet ist, wird diese beim Festziehen der Schraube 6 in der Justierstellung fest fixiert.

Zur Verdrehung der Exzenterbuchse 20 weist diese zumindest eine quer zur Drehachse S6 verlaufende Ausnehmung 22 zum Einführen einer Handhabe 30 auf.

Vorteilhaft ist die Exzenterbuchse 20 aus einem Material mit geringer Oberflächenreibung um eine Reibung zwischen der Exzenterbuchse 20 und dem Gehäuse 8 sowie zwischen der Exzenterbuchse 20 und dem Schraubenkopf 17 zu minimieren. Als Material eignet sich beispielsweise Bronze.

Die Nutzung der Befestigungsschraube 6 als Drehachse S6 der Exzenterbuchse 20 sowie der Befestigungsschraube 7 als Drehachse S7 für die Verschwenkung der Abtastplatte 4 hat auch den Vorteil, dass die Abtasteinheit 3 kompakt baut und keine gegebenenfalls den Anbau an das Maschinenteil 11 störenden Bauteile vorhanden sind. Da zum Festschrauben der Abtastplatte 4 an das Gehäuse 8 die Zugänglichkeit der Schrauben 6, 7 gewährleistet sein muss, ist auch zwangsläufig gewährleistet, dass die Exzenterbuchse 20 zugänglich ist.

Wie bereits erwähnt, fungiert die Abtastplatte 4 als Deckel des Gehäuses 8, der die Abtastelemente wie Lichtquelle und Photodetektoren abdeckt. Die Abtastplatte 4 ist zumindest im Abtastbereich hierzu transparent und weist die Abtastteilung 5 auf. Die Schrauben 6, 7 zur Befestigung der Abtastplatte 4 befinden sich an Ecken bzw. den äußeren Randbereichen des Gehäuses 8 und sind somit weitest möglich voneinander beabstandet angeordnet, woraus der Vorteil einer maximalen Untersetzung und somit einer möglichen Feinverstellung resultiert.

Die Erfindung ist bei Winkel- und Längenmesseinrichtungen einsetzbar.

Anstelle der dargestellten Schrauben 6, 7 können auch Gewindestifte mit aufgeschraubter Mutter als Befestigungselemente verwendet werden.

## Patentansprüche

1. Abtasteinheit mit
- einer Abtastplatte (4) und einem Träger (8), wobei die Abtastplatte (4) mittels mehrerer Befestigungselemente (6, 7) am Träger (8) befestigt ist;
- einem Exzenterelement (20), das um eine erste Drehachse (S6) drehbar ist, und eine Verschwenkung der Abtastplatte (4) gegenüber dem Träger (8) um eine zweite Drehachse (S7) herbeiführt, **dadurch gekennzeichnet, dass**
- der Träger (8) ein Gehäuse (8) der Abtasteinheit (3) ist, und die Abtastplatte (4) einen Raum des Gehäuses (8) abschließt, in dem Abtastelemente angeordnet sind,
- die erste und zweite Drehachse (S6, S7) jeweils von einem der Befestigungselemente (6, 7) gebildet ist, und
- das Gehäuse (8) über mehrere Schrauben (9, 10) an einem zu messenden Maschinenteil (11) befestigbar ist.

2. Abtasteinheit nach Anspruch 1, **dadurch gekennzeichnet, dass** die Abtastplatte (4) mittels zweier Befestigungselemente (6, 7) am Träger (8) befestigt ist.

3. Abtasteinheit nach Anspruch 2, **dadurch gekennzeichnet, dass** die Befestigungselemente Schrauben (6, 7) sind.

4. Abtasteinheit nach Anspruch 3, **dadurch gekennzeichnet, dass** die Schrauben (6, 7) jeweils in ein Gewinde (12, 13) der Abtastplatte (4) eingeschraubt sind und durch ein Durchgangsloch (14, 15) des Trägers (8) ragen.

5. Abtasteinheit nach Anspruch 3 oder 4, **dadurch gekennzeichnet, dass** das Exzenterelement eine Exzenterbuchse (20) ist, die um den Schaft der Schraube (6) drehbar gelagert ist und mit seiner exzentrischen Umfangsfläche (21) mit einer Ausnehmung (16) des Trägers (8) zusammenwirkt um eine Lageverstellung der Schraube (6) zu bewirken.

6. Abtasteinheit nach Anspruch 5, **dadurch gekennzeichnet, dass** die Exzenterbuchse (20) zwischen dem Kopf (17) der Schraube (6) und dem Träger (8) angeordnet ist und durch die Schraube (6) fixierbar ist.

7. Abtasteinheit nach einem der Ansprüche 5 oder 6, **dadurch gekennzeichnet, dass** die Exzenterbuchse (20) eine quer zur ersten Drehachse (S6) verlaufende Ausnehmung (22) zum Einführen einer Handhabe (30) aufweist.

8. Positionsmesseinrichtung mit einem eine Messteilung (2) tragenden Teilungsträger (1) und einer Abtasteinheit (3) zur Abtastung der Messteilung (2) nach einem der vorhergehenden Ansprüche.

## Claims

1. A scanning unit comprising
- a scanning plate (4) and a support (8), wherein the scanning plate (4) is fastened to the support (8) by means of a plurality of fastening elements (6, 7);
- an eccentric element (20), which can be rotated about a first axis of rotation (S6) and which causes a pivoting of the scanning plate (4) relative to the support (8) about a second axis of rotation (S7), **characterized in that**
- the support (8) is a housing (8) of the scanning unit (3) and the scanning plate (4) seals a space of the housing (8) in which scanning elements are arranged,
- the first and second axis of rotation (S6, S7) is in each case formed by one of the fastening elements (6, 7) and
- the housing (8) can be fastened to a machine part (11), which is to be measured, via a plurality of screws (9, 10).

2. The scanning unit according to claim 1, **characterized in that** the scanning plate (4) can be fastened to the support (8) by means of two fastening elements (6, 7).

3. The scanning unit according to claim 2, **characterized in that** the fastening elements are screws (6, 7).

4. The scanning unit according to claim 3, **characterized in that** the screws (6, 7) are in each case screwed into a thread (12, 13) of the scanning plate (4) and project through a through hole (14, 15) of the support (8).

5. The scanning unit according to claim 3 or 4, **characterized in that** the eccentric element is an eccentric bushing (20), which is supported so as to be capable to rotate about the shank of the screw (6) and **in that** its eccentric peripheral surface (21) interacts with a recess (16) of the support (8) so as to cause a position adjustment of the screw (6).

6. The scanning unit according to claim 5, **characterized in that** the eccentric bushing (20) is arranged between the head (17) of the screw (6) and the support (8) and can be fixed by means of the screw (6).

7. The scanning unit according to one of claims 5 or 6, **characterized in that** the eccentric bushing (20) encompasses a recess (22), which extends at right angles to the first axis of rotation (S6), for inserting a handle (30).

8. A position measuring device comprising a scale carrier (1) supporting a measuring graduation (2) and a scanning unit (3) for scanning the measuring graduation (2) according to one of the preceding claims.

## Revendications

1. Unité de balayage avec
- une plaque de balayage (4) et un support (8), dans laquelle la plaque de balayage (4) est fixée au support (8) au moyen de plusieurs éléments de fixation (6, 7) ;
- un élément excentrique (20), rotatif autour d'un premier axe de rotation (S6), et produisant un pivotement de la plaque de balayage (4) par rapport au support (8) autour d'un deuxième axe de rotation (S7), **caractérisée en ce que**
- le support (8) est un boîtier (8) de l'unité de balayage (3), et la plaque de balayage (4) délimite un espace du boîtier (8), dans lequel sont disposés des éléments de balayage,
- les premier et deuxième axes de rotation (S6, S7) sont formés chacun par l'un des éléments de fixation (6, 7), et
- le boîtier (8) peut être fixé par plusieurs vis (9, 10) à une pièce de machine (11) à mesurer.

2. Unité de balayage selon la revendication 1, **caractérisée en ce que** la plaque de balayage (4) est fixée au support (8) au moyen de deux éléments de fixation (6, 7).

3. Unité de balayage selon la revendication 2, **caractérisée en ce que** les éléments de fixation sont des vis (6, 7).

4. Unité de balayage selon la revendication 3, **caractérisée en ce que** les vis (6, 7) sont vissées chacune dans un filet (12, 13) de la plaque de balayage (4) et traversent un trou de passage (14, 15) du support (8).

5. Unité de balayage selon la revendication 3 ou 4, **caractérisée en ce que** l'élément excentrique est une douille excentrique (20), montée de façon rotative autour de l'axe de la vis (6) et coopérant avec sa surface périphérique (21) avec un évidement (16) du support (8), pour produire un changement de position de la vis (6).

6. Unité de balayage selon la revendication 5, **caractérisée en ce que** la douille excentrique (20) est installée entre la tête (17) de la vis (6) et le support (8), et peut être fixée par la vis (6).

7. Unité de balayage selon l'une des revendications 5 ou 6, **caractérisée en ce que** la douille excentrique (20) comporte un évidement (22) s'étendant transversalement au premier axe de rotation (S6), pour l'insertion d'une poignée (30).

8. Dispositif de mesure de position, avec un support de graduation (1) portant une graduation (2), et une unité de balayage (3) pour le balayage de la graduation (2) selon l'une des revendications précédentes.
